# EUROPÄISCHE PATENTANMELDUNG

(11) **EP 0 769 423 A1**
(43) Veröffentlichungstag der Anmeldung: **23.04.1997**
(21) Anmeldenummer: 96115812.8
(22) Anmeldetag: 02.10.1996
(51) Int. Cl.: B60R 21/20

(54) **Lenkwelle für ein Fahrzeug mit einem Gassack-Rückhaltesystem**

(30) Priorität: 20.10.1995 DE 29516625 U
(71) Anmelder: TRW Occupant Restraint Systems GmbH, 73551 Alfdorf (DE)
(72) Erfinder: Heilig, Alexander, 73550 Wissgoldingen (DE); Swann, Tim, Mesa, Arizona 85205 (US)
(74) Vertreter: Degwert, Hartmut, Dipl.-Phys.

(57) **Zusammenfassung**

Die Erfindung betrifft eine Lenkwelle (10) für ein Fahrzeug mit einem Gassack-Rückhaltesystem. Um das Gewicht des Lenkrades des Fahrzeugs sowie die Abmessungen der Nabe zu vermindern, ist vorgesehen, daß in einen sich entlang der Längsachse der Lenkwelle (10) erstreckenden Hohlraum (11), der an dem dem Fahrzeuglenkrad zugeordneten Ende (14) der Lenkwelle (10) mündet, eine Gaserzeugungsladung (30) eingesetzt ist.

## Beschreibung

Die Erfindung betrifft eine Lenkwelle für ein Fahrzeug mit einem Gassack-Rückhaltesystem.

Ein solches Gassack-Rückhaltesystem ist, wenn es für einen Schutz des Fahrers vorgesehen ist, üblicherweise in der Nabe des Lenkrades des Fahrzeuges angeordnet und enthält allgemein einen Gassack und einen Gasgenerator. Im Hinblick auf Bestrebungen, das Gewicht des Lenkrades sowie die Abmessungen der Nabe zu vermindern, ist es Aufgabe der Erfindung, eine neue Lösung für das Problem der Unterbringung des Gasgenerators zu schaffen.

Zur Lösung dieser Aufgabe ist erfindungsgemäß vorgesehen, daß in einen sich entlang der Längsachse der Lenkwelle erstreckenden Hohlraum, der an dem dem Fahrzeuglenkrad zugeordneten Ende der Lenkwelle mündet, eine Gaserzeugungsladung eingesetzt ist. Somit ist der Gasgenerator nicht mehr Bestandteil des Lenkrades, wodurch dessen Gewicht vermindert ist und die Nabe mit geringeren Abmessungen ausgeführt werden kann. Ferner wird ein separates Gasgeneratorgehäuse eingespart.

Weitere Merkmale der Erfindung ergeben sich aus den Unteransprüchen.

Die Erfindung wird nachfolgend unter Bezugnahme auf die beigefügten Zeichnungen beschrieben, in denen mehrere Ausführungsformen der Erfindung dargestellt ist. In diesen Zeichnungen zeigen:
- Fig. 1 einen Längsquerschnitt der erfindungsgemäße Baugruppe;
- Fig. 2 eine weitere Ausführungsform; und
- Fig. 3 eine Ausführungsvariante.

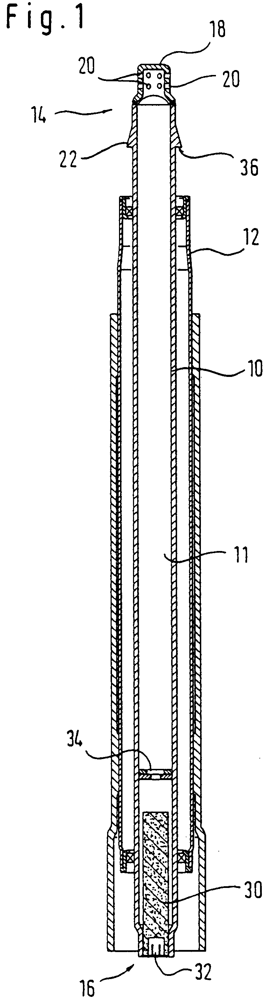

In Fig. 1 ist eine erfindungsgemäße Lenkwelle 10 dargestellt, die drehbar in einem Mantelrohr 12 gelagert ist. Die Lenkwelle weist einen sich entlang ihrer Längsachse erstreckenden Hohlraum 11 auf, der an dem dem (nicht dargestellten) Fahrzeuglenkrad zugeordneten Ende 14 der Lenkwelle 10 mündet. Ein zu diesem Ende 14 entgegengesetztes Ende 16 der Lenkwelle ist für eine Verbindung mit einem (nicht dargestellten) Lenkgetriebe vorgesehen. Am Ende 14 ist die Lenkwelle 10 mit einem allgemein becherartigen Leitfortsatz 18 versehen, in welchem mehrere Ausströmöffnungen 20 ausgebildet sind. An diesem Ende 14 ist in einem gewissen Abstand von dem Leitfortsatz 18 ein radial auf der Außenoberfläche der Lenkwelle 10 nach außen hervorstehender Konus 22 ausgebildet. Am Ende 16 ist eine Gaserzeugungsladung 30 angeordnet, deren Zünder über einen Anschluß 32 mit einer (nicht dargestellten) Auslösesensorik verbunden werden kann. Zwischen der Gaserzeugungsladung und dem Ende 14 ist eine Drossel 34 angeordnet.

Die Befestigung des (nicht dargestellten) Lenkrades an der Lenkwelle 10 kann beispielsweise mittels einer (nicht dargestellten) Überwurfmutter geschehen, die sich an einer von dem Konus 22 gebildeten Abstützfläche 36 abstützt und auf einen geeigneten Fortsatz am Lenkrad aufgeschraubt wird. Somit kann sich der Leitfortsatz 18 in das Innere der Nabe des Lenkrades hineinerstrecken, und das im Bedarsfall von der Gaserzeugungsladung 30 erzeugte Gas strömt direkt in das Innere eines in der Nabe angeordneten Gassackes ein.

Durch die Verwendung der Lenkwelle 10 auch als Gehäuse für den Gasgenerator wird eine erhebliche Gewichtseinsprarung für das Lenkrad erzielt. Ferner kann die Nabe mit geringeren Abmessungen ausgeführt werden. Außerdem kann, da der Gasgenerator nicht mehr Bestandteil des Lenkrades ist, das Lenkrad dem Fahrzeughersteller bereits als fertig vormontierte Baugruppe geliefert werden, bei deren Handhabung keinerlei besondere Vorsichtsmaßnahmen notwendig sind. Durch die Verwendung einer Überwurfmutter zur Befestigung des Lenkrades an der Lenkwelle kann das Lenkrad in einfacher Weise mit der Lenkwelle verbunden werden, ohne daß hierzu der Innenraum der Nabe zugänglich sein muß.

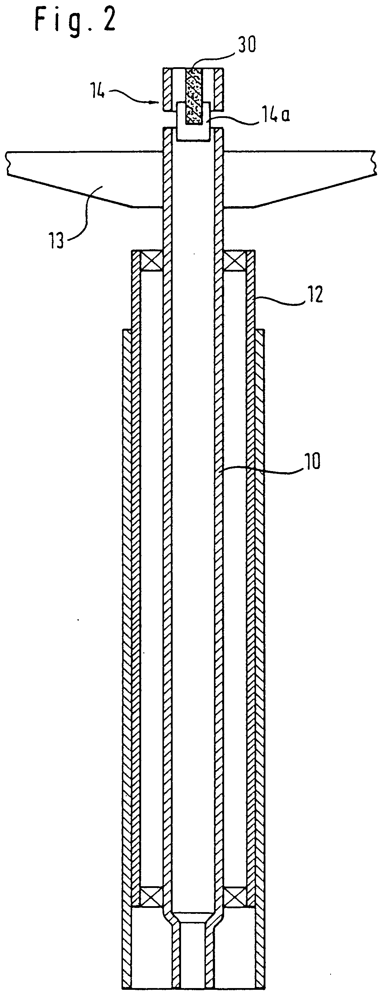

Bei der in Fig. 2 gezeigten Ausführungsform ragt ein Ende 14 der Lenkwelle 10 in die Nabe 13 des Lenkrades hinein. An diesem Ende 14 der Lenkwelle ist ein Diffusor 14a gebildet. Die Gaserzeugungsladung 30 mit Zünder liegt innerhalb der Nabe 13, so daß der elektrische Anschluß für den Zünder über das Lenkrad geführt werden kann.

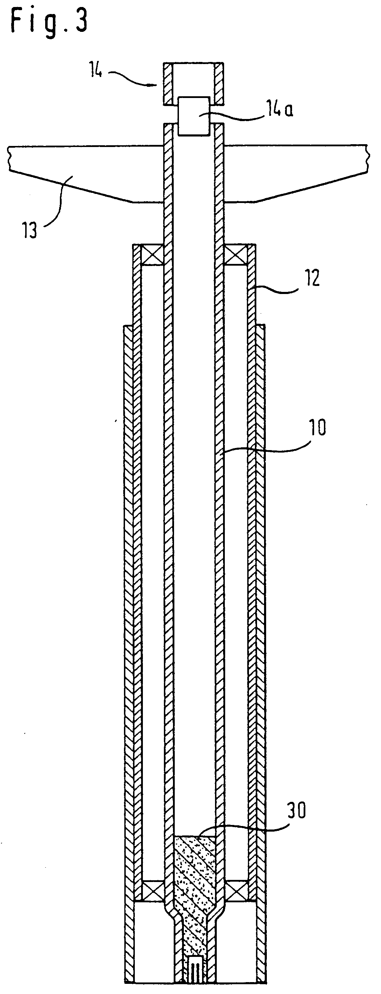

Bei der Ausführungsform nach Fig. 3 ist an dem in die Nabe 13 des Lenkrades hineinragenden Ende 14 der Lenkwelle gleichfalls ein Diffusor 14a angeordnet, jedoch ist die Gaserzeugungsladung 30 mit Zünder am entgegengesetzten Ende der Lenkwelle 10 angeordnet.

## Patentansprüche

1. Lenkwelle (10) für ein Fahrzeug mit einem Gassack-Rückhaltesystem, dadurch gekennzeichnet, daß in einen sich entlang der Längsachse der Lenkwelle (10) erstreckenden Hohlraum (11), der an dem dem Fahrzeuglenkrad zugeordneten Ende (14) der Lenkwelle (10) mündet, eine Gaserzeugungsladung (30) eingesetzt ist.

2. Lenkwelle nach Anspruch 1, dadurch gekennzeichnet, daß sie an ihrem dem Lenkrad zugeordneten Ende (14) mit einem Leitfortsatz (18) versehen ist, in welchem Ausströmöffnungen (20) gebildet sind.

3. Lenkwelle nach einem der vorhergehenden Ansprüche, dadurch gekennzeichnet, daß sie an ihrem dem Lenkrad zugeordneten Ende (14) eine Abstützfläche (36) für eine Überwurfmutter aufweist.
